(19) Europäisches Patentamt
European Patent Office
Office européen des brevets

(11) **EP 2 873 641 B1**

(12) **EUROPEAN PATENT SPECIFICATION**

(45) Date of publication and mention of the grant of the patent:
**22.02.2017 Bulletin 2017/08**

(51) Int Cl.:
*B66C 1/62* *(2006.01)* *F03D 1/00* *(2006.01)*
*B66C 1/10* *(2006.01)*

(21) Application number: **14003526.2**

(22) Date of filing: **15.10.2014**

(54) **C-yoke**

C-Bügel

C-joug

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.11.2013 DK 201300647**

(43) Date of publication of application:
**20.05.2015 Bulletin 2015/21**

(73) Proprietor: **AH Industries A/S**
**6760 Ribe (DK)**

(72) Inventor: **Allan Leth, Frank**
**6000 Kolding (DK)**

(74) Representative: **Rottenberg, Annabell Simone**
**Tropa ApS**
**Aagade 97, 1st Floor**
**8370 Hadsten (DK)**

(56) References cited:
**EP-A1- 2 345 811** **WO-A1-03/100249**
**WO-A1-2010/124744** **JP-A- 2010 265 752**

**Description**

**Field of invention**

The present invention generally relates to lifting equipment for installation of a single wind turbine blade. The invention more particularly relates to a C-yoke configured to handle wind turbine blades during single blade installation and dismantling of blades.

**Prior art**

The prior art yokes configured to handle wind turbine blades are at their one end attached near the proximal end of the wind turbine blade. Thus, they have to be relatively large compared to the length of the wind turbine blade. Accordingly, the yokes are heavy (up to 56 tons) and expensive. It would be desirable to have a smaller and less expensive alternative.

The size of wind turbine blades continues to increase, and the required gripping force increases correspondingly. Accordingly, the pressure applied by the C-yoke towards the surface of the wind turbine blades needs to be increased. This is critical as the pressure applied by the prior art C-yoke towards the surface of the wind turbine blades exceeds the maximum pressure allowed.

EP2345811 discloses a clamp and a method for clamping a blade for a wind turbine, wherein the clamp comprises a first contact surface adapted to contact a portion of a surface of the blade; a second contact surface adapted to contact another portion of the surface of the blade, the second contact surface being displacable relative to the first contact surface; and a bar connected in an adjustable orientation relative to the first contact surface. A first support member and a second support member hold the first contact surface and the second contact surface. An actuator is adapted to displace the first support member relative to the second support member. Installing wind turbine blades is performed with the actuator displacing the first support member relative to the second support member. The actuator is pressing against portions of the surface of the blade such that a generated friction force between the contact surfaces is high enough to exceed a gravitational force resulting from the mass of the blade. There is a risk of the blade being damaged because of the actuator pressing against portions of the blade.

JP2010265752 discloses a method for hoisting a blade of wind turbine generator system maintaining a posture of a frame fixing and holding the blade always horizontal, and a device thereof. When a frame body is hoisted by three ropes, after fixing and holding the blade to a blade holding part of the frame body, signal from a transmitter held by an operator on the ground is transmitted to an oil controller attached to a cylinder connected to the rope. If indicating lamps attached to the frame body are turned on, indicating inclination in a fore-and-aft direction and/or a left-and-right direction, inclination correction is performed by moving a piston rod downward, by sending oil at a piston front side of the cylinder to a piston rear side. Length of the rope is extended by the movement of the piston rod, and the frame body is always maintained always. JP2010365752 teaches preventing, and not allowing, any tilting of the blade during hoisting of the blades. Therefore, a C-yoke capable of handling large wind turbine blades would be desirable.

It is one object of the present invention to provide a C-yoke that is smaller and cheaper to produce than the prior art C-yokes.

It is moreover an object of the present invention to provide a C-yoke capable of handling the large wind turbine blades without exceeding the maximum pressure allowed.

It is also an object of the present invention to provide a C-yoke that can be used to handle wind turbine blades of different types and sizes.

**Summary of the invention**

The object of the present invention can be achieved by a C-yoke as defined in claim 1. Preferred embodiments are defined in the dependent sub claims, explained in the following description and illustrated in the accompanying drawings.

The C-yoke according to the invention is a C-yoke configured to handle a wind turbine blade, which C-yoke comprises:

- a yoke member extending between a first C-member attached to a first end of the yoke member and
- a second C-member attached to the other end of the yoke member,

where the C-members comprise a support member configured to receive a wind turbine blade, where the C-members comprise a clamp member and means for displacing the clamp member relative to the support member, where the support members have a contact surface that has a geometry corresponding to the outer geometry of the wind turbine blade, and where the support members are provided with a number of pads having a coefficient of static friction, $\mu_s$, that allows for tilting the wind turbine blade into an angle up to at least 25 degrees, such as 30 degrees, relative to horizontal without providing any additional force towards the wind turbine blade by using the clamp members, **characterized in** that the displacement means configured to move the clamp members preferably up and down parallel to the longitudinal axes of the first C-member and the second C-member respectively are provided at the C-members.

Hereby, it is achieved that the C-yoke can be used without exposing the wind turbine blade to any damage causing pressure. Moreover, the C-yoke can be used to handle large wind turbine blades.

The C-yoke according to the invention may be configured to handle all types and sizes of wind turbine blades.

The yoke member may be of any suitable type and have any suitable shape.

It may be an advantage that the first C-member attached to a first end of the yoke member is detachably attached to the yoke member. Similarly, it may be an advantage that the second C-member attached to the other end of the yoke member is detachably attached to the yoke member.

The support member which is configured to receive a wind turbine blade may have any suitable size and geometry as long as the geometry of the support member contact surface corresponds to the outer geometry of the wind turbine blade.

By the term "contract surface" is meant the surface on which a number of (rubber) pads are provided.

If necessary, for safety reasons, the C-members comprise a clamp member and means for displacing the clamp member relative to the support member, and that displacement means of the C-members of the C-yoke can provide an additional force against the wind turbine blade in order to increase the normal force between the pads of the clamp members and wind turbine blade attached to the C-yoke.

The clamp member may have any suitable shape and size. It may, however, be an advantage that the clamp members have a geometry corresponding to the outer geometry of the wind turbine blade.

The means for displacing the clamp member relative to the support member may be of any suitable type and size. The means for displacing the clamp member relative to the support member may preferably comprise a hydraulic scissor member comprising two hydraulic cylinders.

It is a prerequisite that the (rubber) pads are of such a type that the coefficient of static friction, $\mu_s$, between the (rubber) pads is large enough to allow for tilting the wind turbine blade into an angle of at least 25 degrees relative to horizontal without providing any additional force towards the wind turbine blade by using the clamp members.

Hereby, the wind turbine blades are not exposed to the high pressure of prior art yokes in which clamp members are pressing against the surface of a wind turbine blade in order to achieve a firm grip to the wind turbine blade.

The support members may be provided with a number of (rubber) pads having a coefficient of static friction, $\mu_s$, which allows for tilting the wind turbine blade into an angle of up to 60 degrees or more relative to horizontal without providing any additional force towards the wind turbine blade by using the clamp members.

It may be an advantage that the coefficient of static friction, $\mu_s$, between the (rubber) pads and a clean and dry glass fibre reinforced plastic plate (wind turbine blade) is at least 5 at 20° Celsius. This can be achieved by applying pads made in a resilient material such as ethylene propylene diene rubber (EPDM) or ethylene propylene rubber (EPM), or alternatively a polymer like polyurethane (PUR) or an elastomer like a high friction silicone rubber. The pads may have a Shore A durometer hardness within the range of 20-95, e.g. between 25-45. The pads may have a Shore A durometer hardness within the range of 30-40.

It may be an advantage that the coefficient of static friction, $\mu_s$, between the rubber pad and a clean and dry glass fibre reinforced plastic plate (wind turbine blade) is at least 3.4 at -10° Celsius. This can be achieved by applying a pad made in ethylene propylene diene rubber (EPDM), ethylene propylene rubber (EPM), or alternatively a polymer like polyurethane (PUR) or an elastomer like a high friction silicone rubber with a Shore A durometer hardness within the range of 20-95, e.g. between 30-40.

It may be an advantage that the coefficient of static friction, $\mu_s$, between the (rubber) pad and a clean and wet glass fibre reinforced plastic plate (wind turbine blade) is at least 3 at -10° Celsius. This can be achieved by applying a pad made in ethylene propylene diene rubber (EPDM), ethylene propylene rubber (EPM), or alternatively a polymer like polyurethane (PUR) with a Shore A durometer hardness within the range of 20-95, e.g. 30-40.

Advantageously, the pads may be provided with a surface structure e.g. including lines of indentation capable of draining away ice. In this way, the surface structure of the pads will ensure a high coefficient of static friction, $\mu_s$, between the (rubber) pad and a wind turbine blade.

It may be an advantage that the support members extend along at least 60%, preferably at least 80%, of the width of the wind turbine blade in the area where it is attached to the support members. Accordingly, the length of the support members is greater than or equal to 60%, preferably at least 80%, of the width of the wind turbine blade in the area where it is attached to the support members.

Hereby, a large contact surface between the wind turbine blade and the support members can be achieved. Accordingly, a better attachment of a wind turbine blade to the C-yoke can be obtained.

The C-yoke may preferably comprise means for detachably attaching an additional C-member to at least one of the two C-members.

Hereby, the contact surface between the wind turbine blade and the support members can be increased, and the C-yoke can be used to large wind turbine blades.

It may be advantageous that the C-yoke comprises means for detachably attaching an additional C-member and/or an additional support member and/or an additional clamp member to at least one of the two C-members.

It is preferred that the C-yoke comprises means for detachably attaching the C-members and replacing the C-members.

It may be beneficial that the C-yoke comprises or is configured to receive one or more detachably mounted C-member.

In this manner, it is possible to use specific C-members that fit (are tailored for) specific wind turbine blades. Accordingly, the C-yoke can be used to wind turbine blades of all types, sizes and shapes.

It may also be an advantage that the C-members and/or the additional C-member(s) comprise a plurality of support sections constituting the support member of the C-members and/or the additional C-member(s).

It may be advantageous that the (rubber) pads have a thickness within the range of 20-50 mm, preferably 25-35 mm.

Hereby, the (rubber) pads can take up tolerances such as irregularity or rough spots in the surface of the wind turbine blade.

It may be beneficial that the C-yoke comprises means for being arranged on a surface (e.g. the ground) while a wind turbine blade is arranged in the C-yoke. Hereby, it is achieved that a wind turbine blade can be stores when arranged in a C-yoke according to the invention. Accordingly, the wind turbine blade may be handled first thing in the morning, whereas the prior art C-yokes require that one initially arranges the wing turbine blade in the C-yoke and then handles it (e.g. mounting the wind turbine blade to the nacelle on a tower) afterwards. Thus, the C-yoke according to the invention saves time during mounting of wind turbine blades to a tower.

It may be an advantage that the support members of the C-yoke are configured to receive a support foot configured to provide a stable support surface between a support member and the ground.

This allows for the C-yoke to be placed and stored directly on the ground when the support feet are mounted to the C-yoke.

It may be advantageous that the C-yoke comprises a plurality of wheels rotatably mounted to the support members and/or to the C-members. The wheels are configured to prevent damaging the wind turbine blade when inserted into the C-yoke.

It may be an advantage that the wheels are arranged in sets of two wheels.

It may be beneficial that a first set of wheels is provided at the distal portion of the support members.

It may be beneficial that a second set of wheels is provided at the proximal end of the support members.

A third set of wheels may be provided at the upper member of the C-members.

It may be beneficial that displacement means configured to move the clamp members preferably up and down parallel to the longitudinal axes of the first C-member and the second C-member respectively are provided at the C-members.

Hereby, an additional normal force (perpendicular to the surface of the (rubber) pads), exerted by the outer surface of the wind turbine blade and the (rubber) pads on each other, can be provided.

The displacement means can press the clamp member against the wind turbine blade and hereby increase the normal force and friction. Accordingly, a better grip can be achieved, and thus the wind turbine blade may be tilted more and still be maintained fixed to the C-yoke.

It may be an advantage that the displacement means comprises a hydraulic scissor member.

It may be beneficial that the hydraulic scissor member comprises a set of hydraulic cylinders. Such a construction is reliable and safe to use.

It may be beneficial that the displacement means comprises one or more actuator(s) configured to displace the clamp member in a straight direction towards the wind turbine blade and hereby increase the normal force and friction.

The actuator(s) may be operated by any suitable source of energy, such as electric current, hydraulic fluid pressure or pneumatic pressure.

It may be beneficial that each C-member comprises a lower portion and an upper member, where the lower portion and the corresponding upper member are detachably attached to each other.

It may be an advantage that a lifting arm is rotatably mounted to the central portion of the yoke member. Hereby, it is possible to tilt the yoke member relative to the lifting arm.

It may be an advantage that the C-yoke comprises a yoke member having a first elongated side member and a parallel extending second side member.

It may be beneficial that the pads are detachably attached to the support members. Hereby, it is possible to replace the pads when replacement is required due to wear or in order to adapt the C-yoke to specific requirements.

It may be advantageous that the side members are attached to C-members arranged in each end of the side members.

It may also be beneficial that two or more, preferably three or more, cross members extend between the side members. The cross members may extend perpendicularly to the side members.

It may be an advantage that an adjustable weight block is mounted to each C-member. The adjustable weight block is configured to adjust the centre of gravity of the C-yoke.

Hereby, the centre of gravity of the C-yoke can be adjusted.

**Description of the Drawings**

The invention will become more fully understood from the detailed description given herein below. The accompanying drawings are given by way of illustration only, and thus, they are not limitative of the present invention. In the accompanying drawings:

Fig. 1        shows a schematic perspective view of a C-yoke according to the invention;
Fig. 2        shows a schematic perspective side view of a C-yoke according to the invention;
Fig. 3        shows a schematic front view of a C-yoke according to the invention;
Fig. 4        shows a close-up perspective view of a C-member of a C-yoke according to the invention;
Fig. 5        shows a perspective view of a wind turbine blade attached to a C-yoke according to the invention;
Fig. 6        shows a side view of a wind turbine blade attached to a C-yoke according to the invention;
Fig. 7 a)     shows a front view of a wind turbine blade attached to a C-yoke according to the invention;

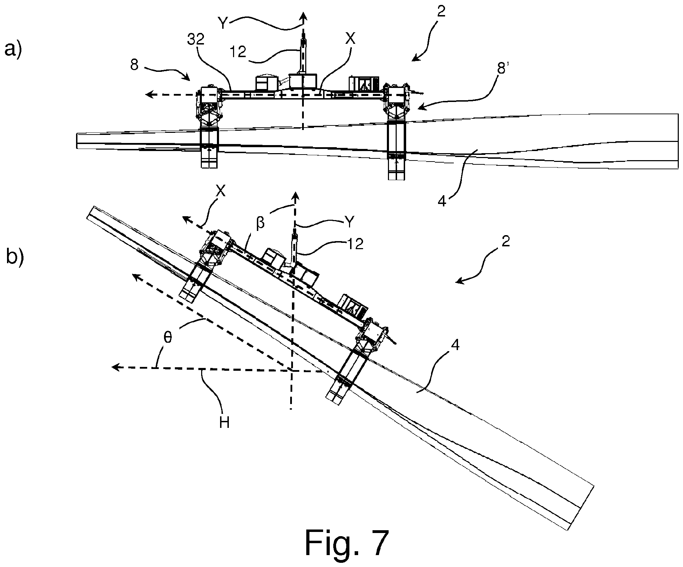

Fig. 7 b)     shows a front view of a tilted wind turbine blade attached to a C-yoke according to the invention;

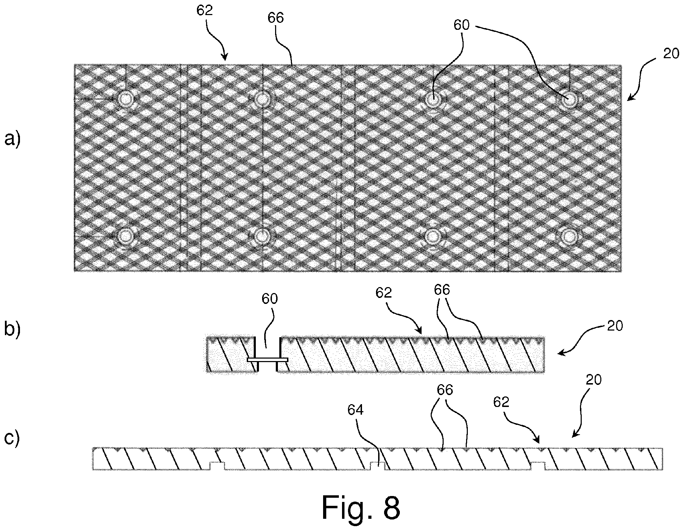

Fig. 8        shows three different views of a rubber pad of a support member according to the invention and

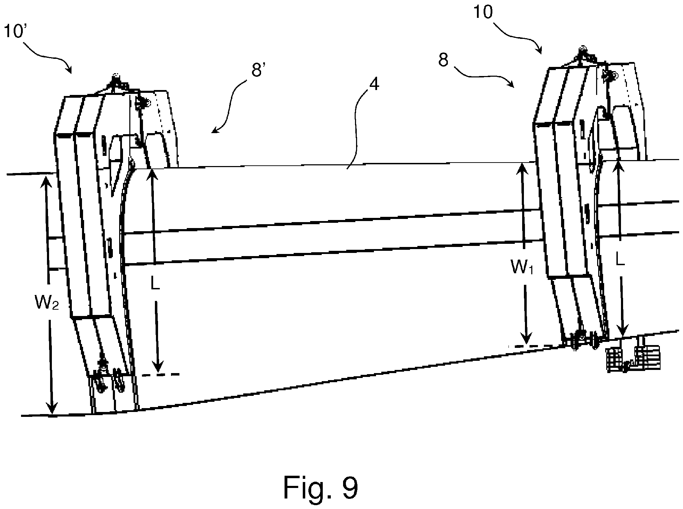

Fig. 9        shows a schematic perspective bottom view of a C-yoke according to the invention.

**Detailed description of the invention**

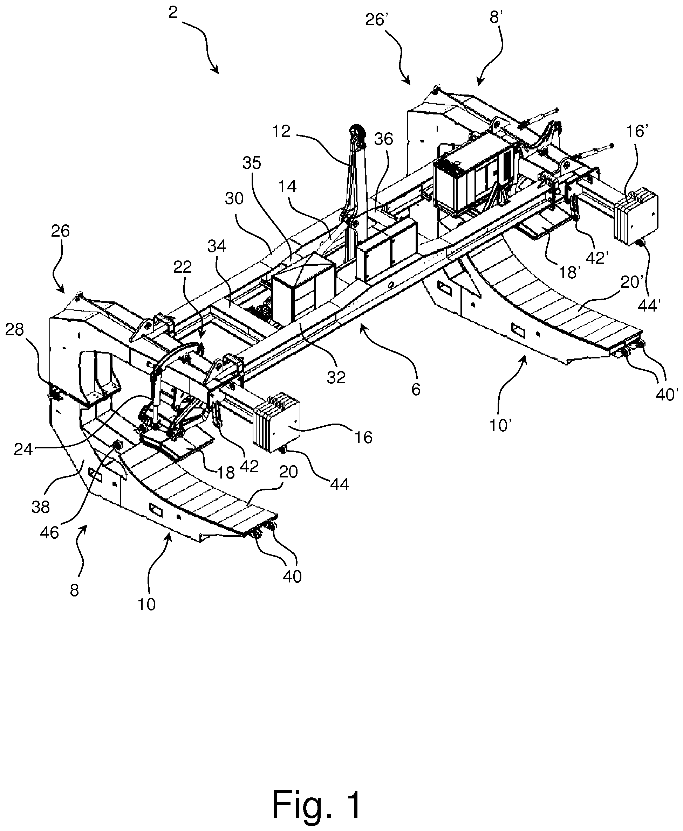

Referring now in detail to the drawings for the purpose of illustrating preferred embodiments of the present invention, a C-yoke 2 of the present invention is illustrated in Fig. 1.

Fig. 1 is a schematic perspective view of a C-yoke 2 according to the invention. The C-yoke 2 comprises a yoke member 6 having a first elongated side member 30 and a parallel extending second side member 32. The side members 30, 32 are attached to C-members 8, 8' arranged in each end of the side members 30, 32.

Three cross members 34, 35, 36 extend between the side members 30, 32. The cross members 34, 35, 36 are perpendicular to the side members 30, 32.

Each of the C-members 8, 8' comprises a support member 10, 10' having a profile that fits the outer surface of a wind turbine blade. Rubber pads 20, 20' are provided on the support members 10, 10'. Wheels 40, 40' are provided at the distal end of the support members 10, 10'. Additional wheels 42, 42', 44, 44' are provided at the upper member 26, while a further set of wheels 46 is provided at the proximal portion of the support member 10.

The wheels 40, 40', 42, 42', 44, 44', 46, 46' are configured to prevent damage to a wind turbine blade when inserted into the C-yoke 2.

In a preferred embodiment according to the invention, the rubber pads 20, 20' are made in a rubber material so that a high friction is achieved between a wind turbine blade and a rubber pad 20, 20' when the wind turbine blade is arranged in the C-yoke 2. The rubber pads 20, 20' comprise a plurality of rectangular pad members.

Each of the C-members 8, 8' comprises an upper member 26, 26' mechanically attached to the ends of the side members 30, 32. A first clamp member 18 is movably attached to the first upper member 26 by means of hydraulic cylinders 24 mounted to a top member 22 arranged on the top side of the upper member 26. Similarly, a second clamp member 18' is attached to upper member 26' of the second C-member 8'. The C-members 8, 8' have a shape that fits the outer surface of a wind turbine blade.

Each of the C-members 8, 8' comprises an intermediate member 38, 38' provided between the upper members 26, 26' and the support members 10, 10'. A joint section 28 is provided between the intermediate member 38 and the upper member 26. The C-member 8 can be disassembled and assembled.

A lifting arm 12 is rotatably mounted to the central portion of the yoke member between the cross members 34, 35. A hydraulic cylinder 14 is attached to a cross member 35 at the central portion of the yoke-member 6. The lifting arm 12 is configured to be mechanically connected to a crane sling. The hydraulic cylinder 14 is adapted to tilt the yoke member 6 relative to the lifting arm 14 during handling of a wind turbine blade.

Adjustable weight blocks 16, 16' are provided at the distal end of each upper member 26, 26'. These adjustable weight blocks 16, 16' are used to balance the C-yoke 2 when handling a wind turbine blade.

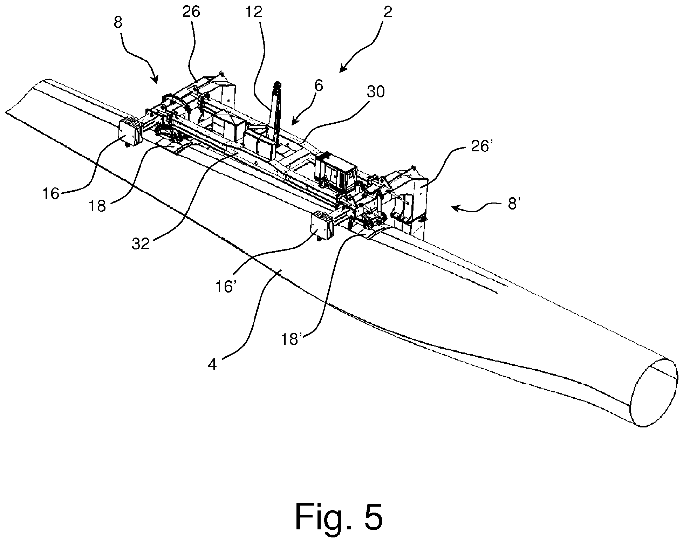

During use, a wind turbine blade (see Fig. 5, Fig. 6 and Fig. 7) is arranged in the space between the support members 10, 10 and the clamp members 18, 18' of the C-yoke. The hydraulic cylinders 24 of the C-yoke will move the clamp members 18, 18' towards and into contact with the support members 10, 10'. If required, the hydraulic cylinders 24 of the C-yoke can provide an additional force against the wind turbine blade in order to increase the normal force between the rubber pads 20, 20' of the clamp members 18, 18' and wind turbine blade attached to the C-yoke.

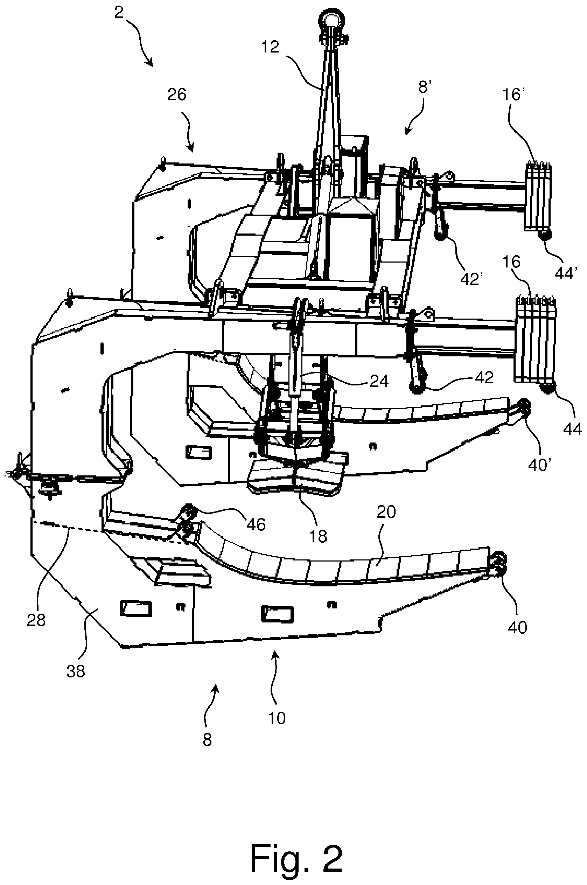

Fig. 2 illustrates a schematic perspective side view of a C-yoke 2 according to the invention. The C-yoke 2 comprises two C-members 8, 8' each having a support member 10, 10' and a clamp member 18 configured to fit the outer geometry of a wind turbine blade.

The C-yoke 2 comprises several wheels 40, 40', 42, 42', 44, 44', 46 provided in order to prevent damage to the wind turbine blades during insertion into the C-yoke 2. Wheels 40, 40' are provided at the distal portion of the support member 10, 10' of the C-members 8, 8'. Another set of wheels 46 are provided at the proximal end of the support member 10.

Other sets of wheels 42, 42', 44, 44' are provided at the upper members 26, 26'. The wheels are configured to prevent damage to the wind turbine blade 42, 42', 44, 44' during insertion into the C-yoke 2.

Adjustable weight blocks 16, 16' comprising a plurality of weight discs are provided at the distal end of each upper member 26, 26'.

The C-member 8 comprises a joint section 28 provided between the intermediate member 38 and the upper member 26 of the C-member 8. A hydraulic cylinder 24 is attached to the upper member 26. The hydraulic cylinder 24 is configured to push the clamp member 18 towards the support member 10, 10' of the C-members 8, 8' and hereby build up a normal force securing that a wind turbine blade can be safety fixed within the C-yoke even when the C-yoke is tilted (see Fig. 5 and Fig. 7 b).

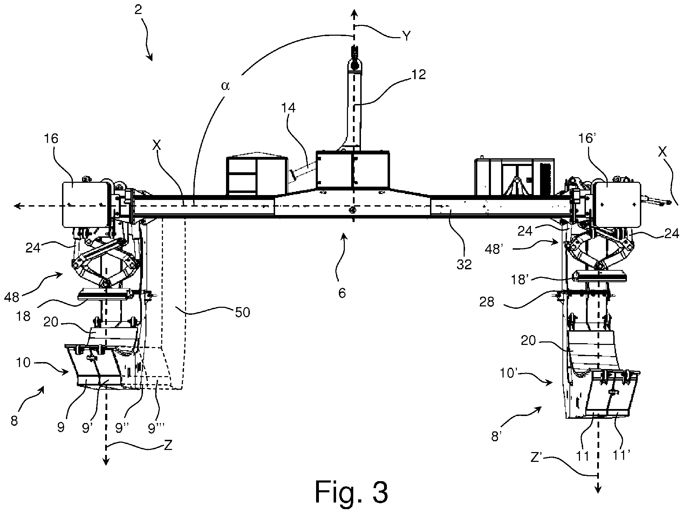

Fig. 3 illustrates a schematic front view of the C-yoke 2 shown in Fig. 1 and in Fig. 2. The C-yoke 2 comprises a yoke member 6 having an elongated side member 32. A first C-member 8 is attached to the left side of the yoke member 6, while a second C-member 8' is attached to the right side of the yoke member 6. The first C-member 8 has a longitudinal axis Z extending parallel to the longitudinal axis Z' of the second C-member 8'.

Adjustable weight blocks 16, 16' are provided at the distal end of each upper member. The weight blocks 16, 16' are configured to adjust the centre of mass of the C-yoke 2 and the wind turbine blade attached to the C-yoke 2.

The C-yoke 2 comprises a lifting arm 12 having a longitudinal axis Y that extends perpendicularly to the longitudinal axis X of the elongated side member 32. Accordingly, the angle $\alpha$ between the longitudinal axis X of the elongated side member 32 and the longitudinal axis Y of the lifting arm 12 is 90 degrees.

The lifting arm 12 is rotatably mounted to the central portion of the yoke member 6. A hydraulic cylinder 14 attached to the central portion of the yoke-member 6 is mechanically connected to the lifting arm 12. Activation of the hydraulic cylinder 14 will rotate the lifting arm 12 and thus change the angle $\alpha$ between the longitudinal axis X of the elongated side member 32 and the longitudinal axis Y of the lifting arm 12.

Each of the C-members 8, 8' comprises an upper member (see Fig. 1 and Fig. 2) mechanically attached to the ends of the side member 32. A first clamp member 18 is movably attached to the upper member of the first C-member 8, while a second clamp member 18' is attached to upper member of the second C-member 8'.

Each C-member 8, 8' comprises a hydraulic scissor member 48, 48'. The hydraulic scissor members 48, 48' comprise two symmetrically arranged hydraulic cylinders 24. The hydraulic cylinders 24 are configured to move the clamp members 18, 18' up and down parallel to the longitudinal axes Z, Z' of the first C-member 8 and the second C-member 8', respectively.

Each of the two C-member 8, 8' comprises a support member 10, 10'. The support members 10, 10' are divided into two support sections 9, 9' and 11, 11'. A high friction rubber pad 20, 20' is provided on each support member 10, 10'.

The C-yoke 2 is configured to be adapted to meet specific requirements including handling large wind turbine blades. The C-members 8, 8' are configured to receive an additional C-member 50 like the one indicated with a dotted line. The additional C-member 50 can be detachably attached to one of the two C-member 8, 8' by any suitable mechanical means. The additional C-member 50 comprises support sections 9", 9"'.

By having one or more additional C-member(s) 50, the surface area of the contact surface between the pad 20, 20' of the support member 10, 10' increases, and thus the pressure provided by the C-yoke against the surface structure of a wind turbine blade can be decreased. Accordingly, by adding a number of additional C-members 50, the C-yoke 2 can be used to handle large wind turbine blades.

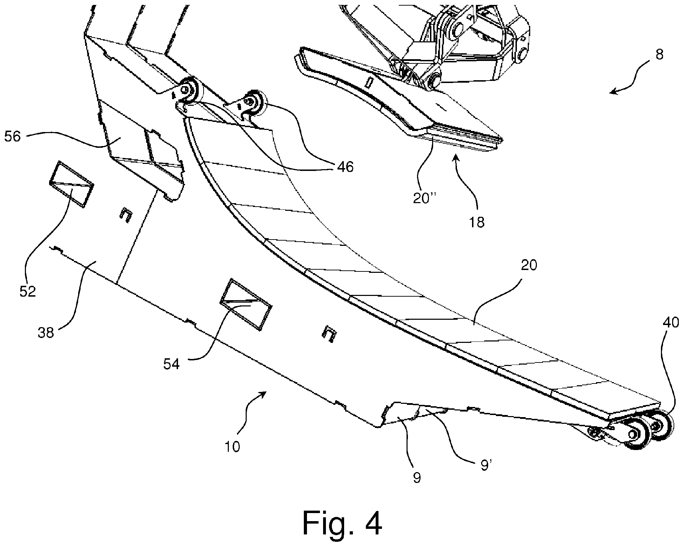

Fig. 4 illustrates a close-up perspective view of a C-member 8 of the C-yoke 2 shown in Fig. 1-3. The C-member 8 comprises a support member 10 having a pad 20 attached to its contact surface. The support member 10 comprises two mechanically joined support sections 9, 9'. Two through holes 54, 56 are provided in the support member 10.

A further through hole 52 extends through the intermediate member 38 attached to the support member 10.

A first set of wheels 40 is rotatably mounted at the distal end of the support member 10. Another set of wheels 46 is rotatably mounted at the proximal end of the support member 10. The wheels 40, 46 are configured to prevent damage to a wind turbine blade when inserted into the C-member 8.

The C-member 8 comprises a clamp member 18 slidably mounted to the upper member of the C-member 8. A rubber pad 20" is attached to the contact surface of the clamp member 18.

Fig. 5 illustrates a perspective view of a wind turbine blade 4 attached to a C-yoke 2 according to the invention. The C-yoke 2 comprises a yoke member 6 having a first side member 30 and a second side member 32 extending parallel to each other. The C-yoke 2 comprises a first C-member 8 attached to the first end of the side members 30, 32. The C-yoke 2 comprises a second C-member 8 attached to the opposite end of the side members 30, 32. Each C-member has an upper member 26, 26' and a clamping member 18, 18' slidably mounted to the upper member 26, 26'.

The force of static friction exerted by the wind turbine blade 4 and the support member (see Fig. 1-4) of the C-members is large enough to keep the wind turbine blade 4 fixed to the C-yoke 2 even when the C-yoke 2 is tilted up to 38 degrees or more relative to horizontal.

In order to make this possible, the rubber pad (see Fig. 1-4) is made in a high friction rubber material provided with a surface structure (e.g. grooves) ensuring that water can be drained away from the surface. For safety reasons, it may be preferred that the clamp members 18, 18' increase the normal force exerted by the support member towards the clamped wind turbine blade.

The C-yoke 2 may be attached to the wind turbine blade 4 at the centre of gravity of the wind turbine blade 4. This is a huge advantage during handling of the wind turbine blade 4.

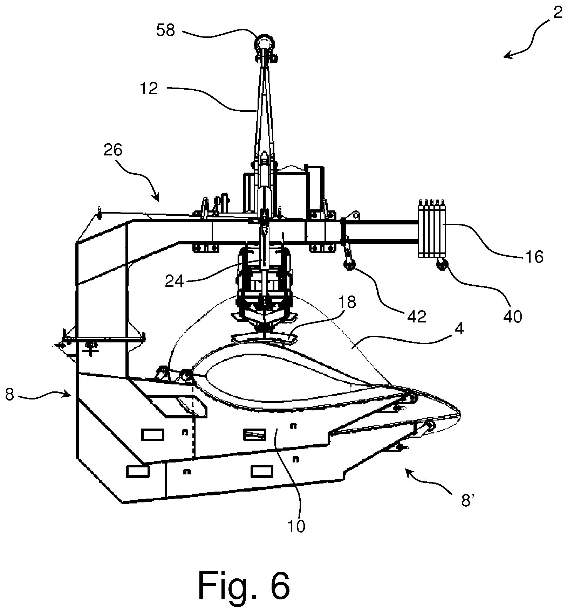

Fig. 6 illustrates a side view of a wind turbine blade 4 attached to a C-yoke 2 as shown in Fig. 5. The wind turbine blade 4 is clamped by the clamping member 18 by extending the hydraulic scissor member (see Fig. 3) comprising a hydraulic cylinder 24. The C-yoke 2 comprises a first C-member 8 and a second C-member 8'.

The first C-member 8 comprises an upper member 26. Adjustable weight blocks 16 are provided at the distal end of the upper member 26. Wheels 42, 40 are rotatably attached to the upper member 26.

A lifting eye 58 is attached to the distal end of a lifting arm 12 which is rotatably attached to the C-yoke 2. The lifting eye 58 is intended to receive a lifting member of a crane.

It can be seen that the support member 10 and the clamp member 18 of the first C-member fit the shape of the wind turbine blade 4.

Fig. 7 a) illustrates a front view of a wind turbine blade 4 attached to a C-yoke 2 according to the invention. The C-yoke 2 comprises a side member 32 mechanically connected to the first C-member 8 and the second C-member 8'. The side member 32 has a longitudinal axis X. The C-yoke 2 comprises a lifting arm 12 having a longitudinal axis Y extending perpendicularly to the longitudinal axis X of the side member 32.

The C-yoke 2 and the turbine blade 4 are horizontally arranged.

Fig. 7 b) illustrates a front view of the wind turbine blade 4 attached to the C-yoke 2 illustrated in Fig. 7 a). The wind turbine blade 4 attached to the C-yoke 2 has been tilted $\theta$ degrees clockwise relative to horizontal H. The lifting arm 12 extends vertically and thus, the angle $\beta$ between the longitudinal axis Y of the lifting arm 12 and the longitudinal axis of the side member 32 is given by equation (1):

$$(1) \qquad \beta = 90^{o} - \theta$$

The tilt angle is determined by the rotation of the lifting arm 12. Thus, the hydraulic scissor member (46, 46' see Fig. 3) can be used to tilt the C-yoke 2.

Fig. 8 illustrates three different views of a rubber pad 20 of a support member according to the invention.

Fig. 8 a) illustrates a top view of a section of a pad 20. Fig. 8 b) illustrates a transverse cross-sectional view of the pad 20, while Fig. 8c) illustrates a longitudinal cross-sectional view of the pad 20.

It is important to underline that the pad 20 shown in Fig. 8 may be one out of a plurality of pads 20 constituting the total liner or lining material of a support member of a C-yoke according to the invention. In practices, a plurality, e.g. 10 pads 20, may be provided side by side on the contact surface of the support members of the C-yoke.

The pad 20 is of the type covering the contact surface of the support members of the two C-members (see Fig. 1-4). It is preferred that the pad 20 is capable of taking up tolerances of the wind turbine blade being in contact with it. Thus, it may be an advantage that the pad 20 has a (Shore A durometer) hardness within the range of 20-95, such as 30-40.

The pad 20 may be produced in ethylene propylene diene rubber (EPDM), ethylene propylene rubber (EPM) or a polymer like polyurethane (PUR) or in any other suitable material.

The pad 20 may have a thickness in the range between 10-50 mm. However, it may be preferred that the thickness is within the range of 20-40 mm, such as 25-35 mm. Hereby, the pad 20 may take up rough spots in the surface of the wind turbine blade in contact with the pad 20.

A number of grooves 60 are provided in the rubber pad 20. These grooves 60 are configured to drain away water from the surface of the pad 20 in order to maintain the highest possible coefficient of static friction $\mu_s$. Hereby, a better "grip" can be provided and maintained by using the C-yoke according to the invention.

The surface of the pad 20 has a surface structure 62 with a plurality of elongated intersecting lines of indentation 64. This surface structure 62 is provided to drain away water from the surface of the pad 20 for achieving the highest possible coefficient of static friction $\mu_s$.

A plurality of transversal track structures 64 extending between the long sides of the pad 20. The track structures 64 have a rectangular cross-section. The track structures 64 increase the rubber pad's ability to take up rough spots in the surface of a wind turbine blade.

The pad 20 may be attached to the support member of the C-member by using any suitable attachment method. It may be preferred that the pad 20 is glued to the support member.

Fig. 9 illustrates a schematic perspective bottom view of a C-yoke 2. A wind turbine blade 4 is attached to C-yoke 2.

The C-yoke 2 comprises a first C-member 8 and a second C-member 8'. The first C-member 8 has a support member 10 with a length L corresponding to the width $W_1$ of the wind turbine blade 4 at the portion of attachment of the first C-member 8. The second C-member 8' has a support member 10' with a length L corresponding to about 90% of the width $W_2$ of the wind turbine blade 4 at the portion of attachment of the second C-member 8'.

The support members 10, 10' extend along more than 90% of the width W of the wind turbine blade 4 at the region at which it is attached to the support members 10, 10'. It can be seen that the length L of the support members 10, 10' is greater than 90% of the width W of the wind turbine blade 4 at the region at which it is attached to the support members 10, 10'.

**List of reference numerals**

| | |
|---|---|
| 2 | - C-yoke |
| 4 | - Wind turbine blade |
| 6, 6' | - Yoke member |
| 8, 8' | - C-member |
| 9, 9', 9'', 9''', 11, 11' | - Support section |
| 10, 10' | - Support member |
| 12 | - Lifting arm |
| 14 | - Hydraulic cylinder |
| 16, 16' | - Adjustable weight blocks |
| 18, 18' | - Clamp member |
| 20, 20', 20'' | - Pad |
| 22 | - Attachment member |
| 24 | - Hydraulic cylinder |
| 26 | - Upper member |
| 28 | - Joint section |
| 30, 32 | - Side member |
| 34, 35, 36 | - Cross member |
| 38 | - Intermediate member |
| 40, 40', 42, 42' | - Wheel |
| 44, 44', 46, 46' | - Wheel |
| 48, 48' | - Hydraulic scissor member |
| 50 | - Additional C-member |
| 52, 54, 56 | - Through hole |
| 58 | - Lifting eye |
| 60 | - Groove |
| 62 | - Surface structure |
| 64 | - Track structure |
| 66 | - Lines of indentation |
| X, Y, Z, Z' | - Longitudinal axis |
| $\alpha$, $\beta$, $\theta$ | - Angle |
| H | - Horizontal |
| $W_1$, $W_2$ | - Width |
| L | - Length |

**Claims**

1.  A C-yoke (2) configured to handle a wind turbine blade (4), which C-yoke (2) comprises:

    - a yoke member (6) extending between a first C-member (8) attached to a first end of the yoke member (6) and
    - a second C-member (8') attached to the other end of the yoke member (6),

    where the C-members (8, 8') comprise a support member (10, 10') configured to receive a wind turbine blade (4), where the C-members (8, 8') comprise a clamp member (18, 18') and means (24, 24') for displacing the clamp member (18, 18') relative to the support member (10, 10'), where the support members (10, 10') have a contact surface that has a geometry corresponding to the outer geometry of the wind turbine blade (4), **characterised in that**, the support members (10, 10') are provided with a number of pads (20, 20', 20") having a coefficient of static friction ($\mu_s$), that allows for tilting the wind turbine blade (4) into an angle ($\theta$) up to at least 25 degrees, such as 30 degrees, relative to horizontal (H) without providing any additional force towards the wind turbine blade (4) by using the clamp members (18,18'), wherein the displacement means (24, 24', 48, 48') configured to move the clamp members (18, 18'), preferably up and down parallel to the longitudinal axes (Z, Z') of the first C-member (8) and the second C-member (8') respectively, are provided at the C-members (8, 8').

2.  A C-yoke (2) according to claim 1, **characterised in that** the pads (20, 20', 20") are made in ethylene propylene diene rubber (EPDM) or ethylene propylene rubber (EPM) or a polymer like polyurethane (PUR) or high friction silicone rubber and that the pads (20, 20', 20") have a Shore A durometer hardness within the range of 20-95, such as between 25-45, preferably within the range of 30-40.

3.  A C-yoke (2) according to one of the preceding claims, **characterised in that** the support members (10, 10') extend along at least 60%, preferably at least 80%, of the width (W) of the wind turbine blade (4) at the region at which it is attached to the support members (10, 10'), so that the length (L) of the support members (10, 10') is greater than or equal to 60%, preferably at least 80%, of the width (W) of the wind turbine blade (4) at the region at which it is attached to the support members (10, 10').

4.  A C-yoke (2) according to one of the preceding claims, **characterised in that** the C-yoke (2) comprises means for detachably attaching an additional C-member (50) and/or an additional support member (10, 10') and/or an additional clamp member (18, 18') to at least one of the two C-members (8, 8').

5.  A C-yoke (2) according to one of the preceding claims, **characterised in that** the C-yoke (2) comprises or is configured to receive one or more detachably mounted C-member (50).

6.  A C-yoke (2) according to one of the preceding claims, **characterised in that** the rubber pads (20, 20', 20") have a thickness within the range of 20-40 mm, preferably 25-35 mm.

7.  A C-yoke (2) according to one of the preceding claims, **characterised in that** the C-yoke (2) comprises means for being arranged on a surface while a wind turbine blade (4) is arranged in the C-yoke (2).

8.  A C-yoke (2) according to one of the preceding claims, **characterised in that** the C-yoke (2) comprises a plurality of wheels (40, 40', 42, 42', 44, 44', 46, 46') rotatably mounted to the support members (10, 10') and/or to the C-members (8, 8'), where the wheels (40, 40', 42, 42', 44, 44', 46, 46') are configured to prevent damage to a wind turbine blade when inserted into the C-yoke (2).

9.  A C-yoke (2) according to one of the preceding claims, **characterised in that** each C-member (8, 8') comprises a lower portion (10, 10', 38, 38') and an upper member (26, 26'), where the lower portion (10, 10', 38, 38') and the corresponding upper member (26, 26') are detachably attached to each other.

10. A C-yoke (2) according to one of the preceding claims, **characterised in that** a lifting arm (12) is rotatably mounted to the central portion of the yoke member (6).

11. A C-yoke (2) according to one of the preceding claims, **characterised in that** the pads (20) are detachable attached to the support members (10, 10').

**Patentansprüche**

1. C-Joch (2), ausgebildet zur Handhabung einer Windturbinenschaufel (4), wobei das C-Joch (2) umfasst:

   - ein Jochelement (6), das sich zwischen einem ersten C-Element (8), das an einem ersten Ende des Jochelements (6) angebracht ist, und
   - einem zweite C-Element (8') erstreckt, das an dem anderen Ende des Jochelements (6) angebracht ist,

   wobei die C-Elemente (8, 8') ein Stützelement (10, 10') umfassen, das ausgebildet ist, um eine Windturbinenschaufel (4) aufzunehmen, wobei die C-Elemente (8, 8') ein Klemmenelement (18, 18') und Mittel (24, 24') zum Verschieben des Klemmenelements (18, 18') relativ zu dem Stützelement (10, 10') umfassen, wobei die Stützelemente (10, 10') eine Kontaktoberfläche aufweisen, die eine Geometrie entsprechend der äußeren Geometrie der Windturbinenschaufel (4) aufweist, **dadurch gekennzeichnet, dass**
   die Stützelemente (10, 10') mit einer Anzahl von Kissen (20, 20', 20'') mit einem Haftreibungskoeffizienten ($\mu_s$) versehen sind, der das Kippen der Windturbinenschaufel (4) in einen Winkel ($\theta$) von bis zu zumindest 25 Grad, wie etwa 30 Grad, relativ zur Horizontalen (H) erlaubt, ohne eine zusätzliche Kraft auf die Windturbinenschaufel (4) durch Verwendung der Klemmenelemente (18, 18') vorzusehen, wobei
   die Verschiebungsmittel (24, 24', 48, 48'), die ausgebildet sind, die Klemmenelemente (18, 18') vorzugsweise auf und ab parallel zu den Längsachsen (Z, Z') des ersten C-Elements (8) und des zweiten C- Elements (8') zu bewegen, jeweils an den C-Elementen (8, 8') vorgesehen sind.

2. C-Joch (2) nach Anspruch 1, **dadurch gekennzeichnet, dass** die Kissen (20, 20', 20'') aus Ethylen-Propylen-Dien-Kautschuk (EPDM) oder Ethylen-Propylen-Kautschuk (EPM) oder einem Polymer wie Polyurethan (PUR) oder Silikonkautschuk mit hoher Reibung hergestellt sind, und dass die Kissen (20, 20', 20'') eine Shore A-Durometer-Härte innerhalb des Bereichs von 20-95, wie etwa zwischen 25-45, vorzugsweise innerhalb des Bereichs von 30-40 aufweisen.

3. C-Joch (2) nach einem der vorhergehenden Ansprüche, **dadurch gekennzeichnet, dass** die Stützelemente (10, 10') sich entlang zumindest 60 %, vorzugsweise zumindest 80 %, der Breite (W) der Windturbinenschaufel (4) an dem Bereich, an dem sie an den Stützelemente (10, 10') angebracht ist, erstrecken, so dass die Länge (L) der Stützelemente (10, 10') größer oder gleich 60 %, vorzugsweise zumindest 80 %, der Breite (W) der Windturbinenschaufel (4) an dem Bereich ist, an dem sie an den Stützelemente (10, 10') angebracht ist.

4. C-Joch (2) nach einem der vorhergehenden Ansprüche, **dadurch gekennzeichnet, dass** das C-Joch (2) Mittel zum abnehmbaren Anbringen eines zusätzlichen C-Elements (50) und/oder eines zusätzlichen Stützelements (10, 10') und/oder eines zusätzlichen Klemmenelements (18, 18') an zumindest einem der beiden C-Elemente (8, 8') umfasst.

5. C-Joch (2) nach einem der vorhergehenden Ansprüche, **dadurch gekennzeichnet, dass** das C-Joch (2) ein oder mehrere abnehmbar montierte C-Elemente (50) umfasst, oder ausgebildet ist, um diese(s) aufzunehmen.

6. C-Joch (2) nach einem der vorhergehenden Ansprüche, **dadurch gekennzeichnet, dass** das Kautschukkissen (20, 20', 20'') eine Dicke innerhalb des Bereichs von 20-40 mm, vorzugsweise 25-35 mm aufweist.

7. C-Joch (2) nach einem der vorhergehenden Ansprüche, **dadurch gekennzeichnet, dass** das C-Joch (2) Mittel umfasst, um an einer Oberfläche angeordnet zu werden, während eine Windturbinenschaufel (4) in dem C-Joch (2) angeordnet wird.

8. C-Joch (2) nach einem der vorhergehenden Ansprüche, **dadurch gekennzeichnet, dass** das C-Joch (2) eine Vielzahl von Rädern (40, 40', 42, 42', 44, 44', 46, 46') umfasst, die drehbar an den Stützelementen (10, 10') und/oder den C-Elementen (8, 8') montiert sind, wobei die Räder (40, 40', 42, 42', 44, 44', 46, 46') ausgebildet sind, um Schäden an einer Windturbinenschaufel zu verhindern, wenn sie in das C-Joch (2) eingesetzt wird.

9. C-Joch (2) nach einem der vorhergehenden Ansprüche, **dadurch gekennzeichnet, dass** jedes C-Element (8, 8') einen unteren Abschnitt (10, 10', 38, 38') und ein oberes Element (26, 26') umfasst, wobei der untere Abschnitt (10, 10', 38, 38') und das entsprechende obere Element (26, 26') abnehmbar aneinander angebracht sind.

10. C-Joch (2) nach einem der vorhergehenden Ansprüche, **dadurch gekennzeichnet, dass** ein Hubarm (12) drehbar an dem zentralen Abschnitt des Jochelements (6) montiert ist.

11. C-Joch (2) nach einem der vorhergehenden Ansprüche, **dadurch gekennzeichnet, dass** die Kissen (20) abnehmbar an den Stützelementen (10, 10') angebracht sind.

## Revendications

1. Étrier en C (2) configuré pour manipuler une aube d'éolienne (4), lequel étrier en C (2) comprend :

   - un élément d'étrier (6) s'étendant entre un premier élément en C (8) attaché à une première extrémité de l'élément d'étrier (6) et
   - un deuxième élément en C (8') attaché à l'autre extrémité de l'élément d'étrier (6),

   où les éléments en C (8, 8') comprennent un élément de support (10, 10') configuré pour recevoir une aube d'éolienne (4), où les éléments en C (8, 8') comprennent un élément de serrage (18, 18') et un moyen (24, 24') pour déplacer l'élément de serrage (18, 18') par rapport à l'élément de support (10, 10'), où les éléments de support (10, 10') ont une surface de contact qui a une géométrie correspondant à la géométrie extérieure de l'aube d'éolienne (4), **caractérisé en ce que**
   les éléments de support (10, 10') sont munis d'un certain nombre de coussins (20, 20', 20") ayant un coefficient de frottement statique ($\mu_s$), qui permet d'incliner l'aube d'éolienne (4) d'un angle ($\theta$) allant jusqu'au moins 25 degrés, par exemple 30 degrés, par rapport à l'horizontale (H) sans fournir une force supplémentaire quelconque à l'aube d'éolienne (4) en utilisant les éléments de serrage (18, 18'), dans lequel les moyens de déplacement (24, 24', 48, 48') configurés pour déplacer les éléments de serrage (18, 18'), de préférence vers le haut et vers le bas parallèlement aux axes longitudinaux (Z, Z') du premier élément en C (8) et du deuxième élément en C (8'), respectivement, sont prévus au niveau des éléments en C (8, 8').

2. Étrier en C (2) selon la revendication 1, **caractérisé en ce que** les coussins (20, 20', 20") sont réalisés en caoutchouc éthylène-propylène-diène (EPDM) ou en caoutchouc éthylène-propylène (EPM) ou en un polymère tel que le polyuréthane (PUR) ou en caoutchouc de silicone à coefficient de frottement élevé et que les coussins (20, 20', 20") ont une dureté Shore A au duromètre comprise dans la plage allant de 20 à 95, par exemple entre 25 et 45, de préférence dans la plage allant de 30 à 40.

3. Étrier en C (2) selon l'une des revendications précédentes, **caractérisé en ce que** les éléments de support (10, 10') s'étendent le long d'au moins 60%, de préférence d'au moins 80%, de la largeur (W) de l'aube d'éolienne (4) dans la région dans laquelle elle est attachée aux éléments de support (10, 10'), de sorte que la longueur (L) des éléments de support (10, 10') soit supérieure ou égale à 60%, de préférence à au moins 80%, de la largeur (W) de l'aube d'éolienne (4) dans la région dans laquelle elle est attachée aux éléments de support (10, 10').

4. Étrier en C (2) selon l'une des revendications précédentes, **caractérisé en ce que** l'étrier en C (2) comprend un moyen pour attacher de manière amovible un élément en C supplémentaire (50) et/ou un élément de support supplémentaire (10, 10') et/ou un élément de serrage supplémentaire (18, 18') à au moins l'un des deux éléments en C (8, 8').

5. Étrier en C (2) selon l'une des revendications précédentes, **caractérisé en ce que** l'étrier en C (2) comprend ou est configuré pour recevoir un ou plusieurs élément(s) en C (50) monté(s) de manière détachable.

6. Étrier en C (2) selon l'une des revendications précédentes, **caractérisé en ce que** les coussins en caoutchouc (20, 20', 20'') ont une épaisseur comprise dans l'intervalle allant de 20 à 40 mm, de préférence de 25 à 35 mm.

7. Étrier en C (2) selon l'une des revendications précédentes, **caractérisé en ce que** l'étrier en C (2) comprend un moyen devant être agencé sur une surface tandis qu'une aube d'éolienne (4) est agencée dans l'étrier en C (2).

8. Étrier en C (2) selon l'une des revendications précédentes, **caractérisé en ce que** l'étrier en C (2) comprend une pluralité de roues (40, 40', 42, 42', 44, 44', 46, 46') montées en rotation sur les éléments de support (10, 10') et/ou sur les éléments en C (8, 8'), où les roues (40, 40', 42, 42', 44, 44', 46, 46') sont configurées pour éviter d'endommager une aube d'éolienne lorsqu'elle est insérée dans l'étrier en C (2).

9. Étrier en C (2) selon l'une des revendications précédentes, **caractérisé en ce que** chaque élément en C (8, 8') comprend une partie inférieure (10, 10', 38, 38') et un élément supérieur (26, 26'), où la partie inférieure (10, 10', 38, 38') et l'élément supérieur correspondant (26, 26') sont attachés de manière amovible l'un(e) à l'autre.

10. Étrier en C (2) selon l'une des revendications précédentes, **caractérisé en ce qu'**un bras de levage (12) est monté en rotation sur la partie centrale de l'élément d'étrier (6).

11. Étrier en C (2) selon l'une des revendications précédentes, **caractérisé en ce que** les coussins (20) sont attachés de manière amovible aux éléments de support (10, 10').

Fig. 1

Fig. 2

Fig. 3

Fig. 4

Fig. 5

Fig. 6

Fig. 7

a)

b)

c)

## Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2345811 A
- JP 2010265752 B
- JP 2010365752 B